# EUROPEAN PATENT APPLICATION

(11) **EP 4 564 916 A1**
(43) Date of publication of application: **04.06.2025**
(21) Application number: 23856514.7
(22) Date of filing: 16.08.2023
(51) Int. Cl.: H04W 36/00, H04W 84/06, H04W 24/10

(54) **COMMUNICATION METHODS AND COMMUNICATION APPARATUS**

(30) Priority: 23.08.2022 CN 202211014322
(71) Applicant: Huawei Technologies Co., Ltd., Shenzhen, Guangdong 518129 (CN)
(72) Inventor: ZHONG, Yaping, Shenzhen, Guangdong 518129 (CN); HU, Xingxing, Shenzhen, Guangdong 518129 (CN)
(74) Representative: Pfenning, Meinig & Partner mbB
(86) International application number: PCT/CN2023/113241
(87) International publication number: WO 2024/041424

(57) **Abstract**

Embodiments of this application provide a communication method and a communication apparatus. The method includes: receiving first information from a network device, where the first information includes assistance information used to determine a reference point of a first cell, and a terminal device is located in the first cell; predicting a distance between the terminal device and the reference point in a first time period based on the assistance information and location information of the terminal device; and determining, based on threshold information and the predicted distance, whether to perform cell measurement. A condition is set for performing cell measurement, to avoid invalid cell measurement, and reduce energy consumption of the terminal device.

## Description

This application claims priority to Chinese Patent Application No. 202211014322.2, filed with the China National Intellectual Property Administration on August 23, 2022 and entitled "COMMUNICATION METHOD AND COMMUNICATION APPARATUS", which is incorporated herein by reference in its entirety.

### TECHNICAL FIELD

This application relates to the field of communication technologies, and more specifically, to a communication method and a communication apparatus.

### BACKGROUND

A non-terrestrial network (non-terrestrial network, NTN) technology extends an application field of a cellular communication technology. A non-terrestrial network device like a satellite may be used to support both terrestrial communication and space communication, and provide wider communication coverage.

In an NTN network, coverage of an NTN cell is wide, and a terminal device is greatly affected by movement of a non-terrestrial network device relative to the terminal device or movement of the terminal device relative to a non-terrestrial network device. For example, because the non-terrestrial network device moves at a high speed, the terminal device may be about to enter a central area of the cell from an edge area of the cell in short time, and the terminal device may have started cell measurement in the edge area. Such unnecessary cell measurement increases energy consumption of the terminal device.

### SUMMARY

Embodiments of this application provide a communication method and a communication apparatus, to prevent a terminal device from performing unnecessary cell measurement, and reduce energy consumption of the terminal device.

According to a first aspect, a communication method is provided. The method includes: receiving first information from a network device, where the first information includes assistance information used to determine a reference point of a first cell, and a terminal device is located in the first cell; predicting a distance between the terminal device and the reference point in a first time period based on the assistance information and location information of the terminal device; and determining, based on threshold information and the predicted distance, whether to perform cell measurement, where the threshold information includes a first threshold.

According to the communication method provided in this application, a distance between the terminal device and the reference point in a future time period, for example, the first time period, is predicted, and whether to perform cell measurement is determined based on the predicted distance and the threshold information, to prevent the terminal device from performing invalid cell measurement, for example, prevent the terminal device from performing cell measurement when moving from an edge area of the cell to a central area of the cell. This reduces energy consumption of the terminal device.

According to a second aspect, a communication method is provided. The method includes: A network device sends first information to a terminal device. The first information includes assistance information used to determine a reference point of a first cell, and the terminal device is located in the first cell. The terminal device receives the first information, predicts a distance between the terminal device and the reference point in a first time period based on the assistance information and location information of the terminal device, and determines, based on threshold information and the predicted distance, whether to perform cell measurement. The threshold information includes a first threshold.

With reference to the first aspect or the second aspect, in some implementations, the assistance information includes one or more of the following: location information of the reference point, time information of the reference point, ephemeris information, and path information of the reference point.

With reference to the first aspect or the second aspect, in some implementations, when predicting that the distance between the terminal device and the reference point in the first time period is greater than or equal to the first threshold, the terminal device determines to perform cell measurement.

For example, when predicting that the distance between the terminal device and the reference point in the first time period is always greater than or equal to the first threshold, the terminal device performs cell measurement. Alternatively, the first time period is divided into a plurality of time points according to a first rule. When distances between the terminal device and the reference point are greater than or equal to a first threshold at m time points, and m is greater than a first preset value, the terminal device performs cell measurement.

With reference to the first aspect or the second aspect, in some implementations, when predicting that the distance between the terminal device and the reference point is less than the first threshold at an end moment of the first time period, the terminal device determines not to perform cell measurement.

For example, a moving path of the terminal device may include linear motion, curvilinear motion, or spiral motion. At the end moment of the first time period, the terminal device may not perform cell measurement provided that it is predicted that the distance between the terminal device and the reference point is less than the first threshold. At another moment in the first time period, the distance between the terminal device and the reference point being greater than, less than, or equal to the first threshold may not be used as a condition for the terminal to determine whether to perform cell measurement.

With reference to the first aspect or the second aspect, in some implementations, when predicting that the distance between the terminal device and the reference point in the first time period continuously decreases, the terminal device determines not to perform cell measurement.

For example, when the terminal device predicts that the distance between the terminal device and the reference point continuously decreases in the first time period, it indicates that the terminal device approaches the reference point, and the terminal device performs cell measurement.

For example, when predicting that in the first time period, the distance between the terminal device and the reference point first continuously decreases and then continuously increases, but at the end moment of the first time period, the distance between the terminal device and the reference point is still less than the first threshold, the terminal device does not perform cell measurement.

With reference to the first aspect or the second aspect, in some implementations, the threshold information further includes a second threshold, and the second threshold is greater than the first threshold. The second threshold and the first threshold are used together by the terminal device to determine whether to perform cell measurement, to improve accuracy of a determining process, avoid invalid cell measurement, and avoid missing of cell measurement that needs to be performed.

With reference to the first aspect or the second aspect, in some implementations, when the distance between a current location of the terminal device and the reference point is greater than or equal to the first threshold and less than the second threshold, and the terminal device predicts that the distance between the terminal device and the reference point is less than the first threshold at an end moment of the first time period, the terminal device determines not to perform cell measurement; or when predicting that the distance between the terminal device and the reference point is greater than or equal to the first threshold in the first time period, the terminal device determines to perform cell measurement.

With reference to the first aspect or the second aspect, in some implementations, when the distance between the current location of the terminal device and the reference point is greater than or equal to the second threshold, the terminal device performs cell measurement, and does not need to determine, based on the predicted distance between the terminal device and the reference point in the first time period, whether to perform measurement. When predicting that the distance between the current location of the terminal device and the reference point is greater than or equal to the second threshold, the terminal device is located in the edge area of the cell. In this case, the terminal device determines to perform cell measurement, to select a cell that can provide a better service for the terminal device. This improves communication quality of the terminal device.

With reference to the first aspect or the second aspect, in some implementations, when predicting that the distance between the terminal device and the reference point in the first time period is greater than or equal to the second threshold, the terminal device determines to perform cell measurement. In this implementation, when predicting that the terminal device may be located in the edge area of the cell in a future time period, the terminal device determines to perform cell measurement, to select a cell that can provide a better service for the terminal device. This improves communication quality of the terminal device.

With reference to the first aspect or the second aspect, in some implementations, the terminal device receives first indication information from the network device. The first indication information indicates whether the terminal device predicts the distance between the terminal device and the reference point in the first time period based on the assistance information and the location information of the terminal device, and/or the first indication information further indicates whether the terminal device determines, based on the threshold information and the distance, whether to perform cell measurement.

Based on the foregoing solution, the terminal device determines, based on the first indication information of the network device, whether to predict the distance between the terminal device and the reference point, and whether to determine, based on the distance, whether to perform cell measurement. The terminal device can perform valid cell measurement based on the first indication information, to prevent the terminal device from performing invalid cell measurement, and reduce energy consumption of the terminal device.

According to a third aspect, a communication method is provided, and is used in a terminal device. The method includes: receiving first information from a network device. The first information indicates whether a first cell exists in coverage of a first beam, a type of the first cell includes a terrestrial network (terrestrial network, TN) cell or an NTN cell, and the first beam corresponds to a serving cell of the terminal device. The terminal device determines, based on the first information, whether to perform cell measurement on the first cell.

According to a fourth aspect, a communication method is provided, and is used in a network device. The method includes: determining first information, where the first information indicates whether a first cell exists in coverage of a first beam, a type of the first cell includes a TN cell or an NTN cell, and the first beam corresponds to a serving cell of a terminal device; and sending the first information to the terminal device.

According to the communication method provided in this application, when determining, based on the first information, that the first cell exists in the coverage of the first beam, the terminal device performs cell measurement on the first cell. When determining that the first cell does not exist in the coverage of the first beam, the terminal device does not perform cell measurement on the first cell. Therefore, when the first cell does not exist in the coverage of the first beam, the terminal device is prevented from initiating invalid cell measurement, and energy consumption of the terminal device is reduced.

For example, the terminal device obtains the first beam through measurement, and determines a correspondence between the first beam and the first cell based on the first information delivered by the network device. For example, the terminal device determines, based on the first information, whether the first cell exists in the first beam, and determines which first cells exist in the first beam. When determining, based on the first information, that the first cell exists in the first beam, the terminal device performs cell measurement on the first cell. When determining that the first cell does not exist in the coverage of the first beam, the terminal device does not perform cell measurement on the first cell. Therefore, when the first cell does not exist in the coverage of the first beam, the terminal device is prevented from initiating invalid cell measurement, and energy consumption of the terminal device is reduced.

With reference to the third aspect or the fourth aspect, in an implementation, when the terminal device obtains a beam through measurement, and determines, based on the first information, that the first cell exists in coverage of the beam, the terminal device performs cell measurement on the first cell. The terminal device receives beam information of the network device, and determines, based on the beam information, whether the first cell exists in the coverage of the beam. When determining that the first cell exists in the coverage of the beam, the terminal device performs cell measurement on the first cell. When the terminal device determines that the first cell does not exist in the coverage of the beam, the terminal device does not perform cell measurement on the first cell.

The first cell in this application may be a cell of a same type, or may be a frequency of a cell of a same type. The first cell may include one or more cells of a same type.

With reference to the third aspect or the fourth aspect, in some implementations, when determining, based on the first information, to perform cell measurement, the terminal device determines, based on the first information, to measure a first frequency, where the first frequency is a frequency corresponding to the first cell.

With reference to the third aspect or the fourth aspect, in some implementations, there is a correspondence between the first beam and the first frequency.

With reference to the third aspect or the fourth aspect, in some implementations, the correspondence includes a correspondence between an index of the first beam and an index of the first frequency, and/or the correspondence between the first beam and the first frequency.

With reference to the third aspect or the fourth aspect, in some implementations, the first beam belongs to a beam set of the serving cell, and the first information includes index information of frequencies corresponding to the beam set and/or information about the frequencies in the beam set.

According to a fifth aspect, a communication apparatus is provided, and includes: a transceiver unit, configured to receive first information from a network device, where the first information includes assistance information used to determine a reference point of a first cell, and a terminal device is located in the first cell; and a processing unit, configured to predict a distance between the terminal device and the reference point in a first time period based on the assistance information and location information of the terminal device. The processing unit is further configured to determine, based on threshold information and the predicted distance, whether to perform cell measurement. The threshold information includes a first threshold.

With reference to the fifth aspect, in some implementations, the processing unit is configured to predict that the distance between the terminal device and the reference point in the first time period is greater than or equal to the first threshold, and determine to perform cell measurement.

With reference to the fifth aspect, in some implementations, the processing unit is further configured to predict that the distance between the terminal device and the reference point is less than the first threshold at an end moment of the first time period, and determine not to perform cell measurement.

With reference to the fifth aspect, in some implementations, the processing unit is configured to predict that the distance between the terminal device and the reference point continuously decreases in the first time period, and determine not to perform cell measurement.

With reference to the fifth aspect, in some implementations, the threshold information further includes a second threshold, and the second threshold is greater than the first threshold.

With reference to the fifth aspect, in some implementations, when the distance between the terminal device and the reference point is greater than or equal to the first threshold and less than the second threshold, the processing unit is configured to predict that the distance between the terminal device and the reference point is less than the first threshold at an end moment of the first time period, and determine not to perform cell measurement; or the processing unit is configured to predict that the distance between the terminal device and the reference point in the first time period is greater than or equal to the first threshold, and determine to perform cell measurement.

With reference to the fifth aspect, in some implementations, the processing unit is configured to: when the distance between the terminal device and the reference point is greater than or equal to the second threshold, determine to perform cell measurement.

With reference to the fifth aspect, in some implementations, the processing unit is configured to predict that the distance between the terminal device and the reference point in the first time period is greater than or equal to the second threshold, and determine to perform cell measurement.

With reference to the fifth aspect, in some implementations, the transceiver unit is further configured to receive first indication information from the network device. The first indication information indicates whether the processing unit predicts the distance between the terminal device and the reference point in the first time period based on the assistance information and the location information of the terminal device, and/or the first indication information further indicates whether the processing unit determines, based on the threshold information and the distance, whether to perform cell measurement.

According to a sixth aspect, a communication apparatus is provided, and includes a transceiver unit, configured to send first information to a terminal device, where the first information includes assistance information used to determine a reference point of a first cell, and the terminal device is located in the first cell.

With reference to the fifth aspect or the sixth aspect, in some implementations, the assistance information includes one or more of the following: location information of the reference point, time information of the reference point, ephemeris information, and path information of the reference point.

According to a seventh aspect, a communication apparatus is provided, and includes: a transceiver unit, configured to receive first information from a network device, where the first information indicates whether a first cell exists in coverage of a first beam, a type of the first cell includes a TN cell or an NTN cell, and the first beam corresponds to a serving cell of a terminal device; and a processing unit, configured to determine, based on the first information, whether to perform cell measurement on the first cell.

With reference to the seventh aspect, in some implementations, the processing unit is configured to determine, based on the first information, to measure a first frequency, where the first frequency is a frequency corresponding to the first cell.

According to an eighth aspect, a communication apparatus is provided, and includes: a processing unit, configured to determine first information, where the first information indicates whether a first cell exists in coverage of a first beam, a type of the first cell includes a TN cell or an NTN cell, and the first beam corresponds to a serving cell of a terminal device; and a transceiver unit, configured to send the first information to the terminal device.

With reference to the seventh aspect or the eighth aspect, in some implementations, there is a correspondence between the first beam and a first frequency.

With reference to the seventh aspect or the eighth aspect, in some implementations, the correspondence includes a correspondence between an index of the first beam and an index of the first frequency, and/or the correspondence between the first beam and the first frequency.

With reference to the seventh aspect or the eighth aspect, in some implementations, the first beam belongs to a beam set of the serving cell, and the first information includes index information of frequencies corresponding to the beam set and/or information about the frequencies in the beam set.

According to a ninth aspect, a communication apparatus is provided. The apparatus includes units or modules such as a processing unit and/or a transceiver unit that are configured to perform the method in any one of the first aspect to the fourth aspect and any possible implementation of the first aspect to the fourth aspect.

In an implementation, the apparatus is a communication device, for example, a terminal device or a network device. When the apparatus is a communication device, a communication unit may be a transceiver or an input/output interface, and the processing unit may be at least one processor. Optionally, the transceiver may be a transceiver circuit. Optionally, the input/output interface may be an input/output circuit.

In another implementation, the apparatus is a chip, a chip system, or a circuit used in a communication device. When the apparatus is a chip, a chip system, or a circuit used in a communication device, a communication unit may be an input/output interface, an interface circuit, an output circuit, an input circuit, a pin, a related circuit, or the like of the chip, the chip system, or the circuit, and the processing unit may be at least one processor, a processing circuit, a logic circuit, or the like.

According to a tenth aspect, a communication apparatus is provided. The apparatus includes at least one processor, configured to execute a computer program or instructions stored in a memory, to perform the method in any possible implementation of the first aspect to the fourth aspect. Optionally, the apparatus further includes the memory, configured to store the computer program or the instructions. Optionally, the apparatus further includes a communication interface, and the processor reads, through the communication interface, the computer program or the instructions stored in the memory.

In an implementation, the apparatus is a communication device, for example, a terminal device or a network device.

In another implementation, the apparatus is a chip, a chip system, or a circuit used in a communication device.

According to an eleventh aspect, this application provides a processor, configured to perform the methods provided in the foregoing aspects. Unless otherwise specified, or if operations such as sending and obtaining/receiving related to the processor do not conflict with actual functions or internal logic in related descriptions, the operations may be understood as operations such as outputting, receiving, and inputting performed by the processor, or may be understood as sending and receiving operations performed by a radio frequency circuit and an antenna. This is not limited in this application.

According to a twelfth aspect, a computer-readable storage medium is provided. The computer-readable medium stores program code executed by a device, and the program code is for performing the method in any possible implementation of the first aspect to the fourth aspect.

According to a thirteenth aspect, a computer program product including instructions is provided. When the computer program product runs on a computer, the computer is enabled to perform the method in any possible implementation of the first aspect to the fourth aspect.

According to a fourteenth aspect, a communication system is provided, and includes a terminal device and a network device. The terminal device may perform the method in the first aspect, the second aspect, or the third aspect, and the network device may perform the method in the second aspect or the fourth aspect.

### BRIEF DESCRIPTION OF DRAWINGS

FIG. 1 is a diagram of a structure of an NTN-based network architecture according to this application;
FIG. 2 is a diagram of another structure of an NTN-based network architecture according to this application;
FIG. 3 is a diagram of still another structure of an NTN-based network architecture according to this application;
FIG. 4 is a diagram of yet another structure of an NTN-based network architecture according to this application;
FIG. 5 is a diagram of coverage of a low earth orbit satellite according to this application;
FIG. 6 is a diagram of other coverage of a low earth orbit satellite according to this application;
FIG. 7 is a schematic flowchart of a communication method according to an embodiment of this application;
FIG. 8 is a diagram of a distance, varying with time, between a terminal device and a reference point of a cell according to an embodiment of this application;
FIG. 9 is a schematic flowchart of another communication method according to an embodiment of this application;
FIG. 10 is a block diagram of a communication apparatus according to an embodiment of this application; and
FIG. 11 is a block diagram of another communication apparatus according to an embodiment of this application.

### DESCRIPTION OF EMBODIMENTS

The following describes technical solutions in embodiments in this application with reference to accompanying drawings.

The technical solutions in embodiments of this application may use various radio access technologies, for example, a long term evolution (long term evolution, LTE) technology, a long term evolution-advanced (long term evolution-advanced, LTE-A) technology, a new radio (new radio, NR) technology, and a future-oriented radio access technology like a radio access technology used in a 6th generation (the 6th generation, 6G) mobile communication system. This is not limited in this application.

The technical solutions provided in this application may be applied to an NTN system, machine type communication (machine type communication, MTC), long term evolution-machine (long term evolution-machine, LTE-M), a device-to-device (device-to-device, D2D) network, a machine-to-machine (machine-to-machine, M2M) network, an Internet of things (Internet of things, IoT) network, or another network. The IoT network may include, for example, an Internet of vehicles.

In embodiments of this application, a network device includes a non-terrestrial network device like a satellite, or includes an access network (access network, AN) device located on the ground, for example, a base station located on the ground. The network device is an access device that is used by a terminal device to access a mobile communication system in a wireless manner. The network device may alternatively be a device that communicates with the terminal device through an air interface. The access network device in embodiments of this application may include an evolved NodeB (evolved NodeB, eNB, or e-NodeB) in an LTE system or an LTE-A system, a next generation NodeB (next generation NodeB, gNB) in an NR system, an access node in a wireless fidelity (wireless fidelity, Wi-Fi) system, or the like. Alternatively, the network device may be a relay station, a vehicle-mounted device, a future evolved public land mobile network (Public Land Mobile Network, PLMN) device, a device in an M2M network, a device in an IoT network, an uncrewed aerial vehicle device, or the like. The access network device in a V2X system may be a road side unit (road side unit, RSU). A specific technology and a specific device form used by the network device are not limited in embodiments of this application.

In some deployments, the network device may include a central unit (central unit, CU) and a DU. The network device may further include an active antenna unit (active antenna unit, AAU). The CU implements some functions of the network device, and the DU implements some functions of the network device. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a medium access control (medium access control, MAC) layer, and a physical (physical, PHY) layer. The AAU implements some physical layer processing functions, radio frequency processing, and a function related to an active antenna. Information at the RRC layer is generated by the CU, and is finally encapsulated at the PHY layer of the DU into information at the PHY layer, or is transformed from information at the PHY layer. Therefore, in this architecture, higher layer signaling such as RRC layer signaling may also be considered as being sent by the DU, or sent by the DU and the AAU. It may be understood that the access network device may be a device including one or more of a CU node, a DU node, or an AAU node. In addition, the CU may be classified as an access network device in an access network (radio access network, RAN), or the CU may be classified as an access network device in a core network (core network, CN). This is not limited in this application.

The terminal device in embodiments of this application may also be referred to as user equipment (user equipment, UE), a terminal, an access terminal, a subscriber unit, a subscriber station, a mobile station, a mobile console, a remote station, a remote terminal, a mobile device, a user terminal, a wireless communication device, a user agent, or a user apparatus. The terminal in embodiments of this application may be a mobile phone (mobile phone), a tablet computer (pad), a computer having a wireless transceiver function, a virtual reality (virtual reality, VR) terminal, an augmented reality (augmented reality, AR) terminal, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a vehicle-mounted device, a wearable device, or the like.

In a possible application scenario, the NTN system may include a satellite system. In addition, the NTN system may further include a non-terrestrial network device like a high altitude platform (high altitude platform station, HAPS). The non-terrestrial network device in embodiments of this application is not limited to the foregoing example. The non-terrestrial network device in this application may also be referred to as an air network device.

The NTN system may have a plurality of different architectures. The following provides descriptions by using examples.

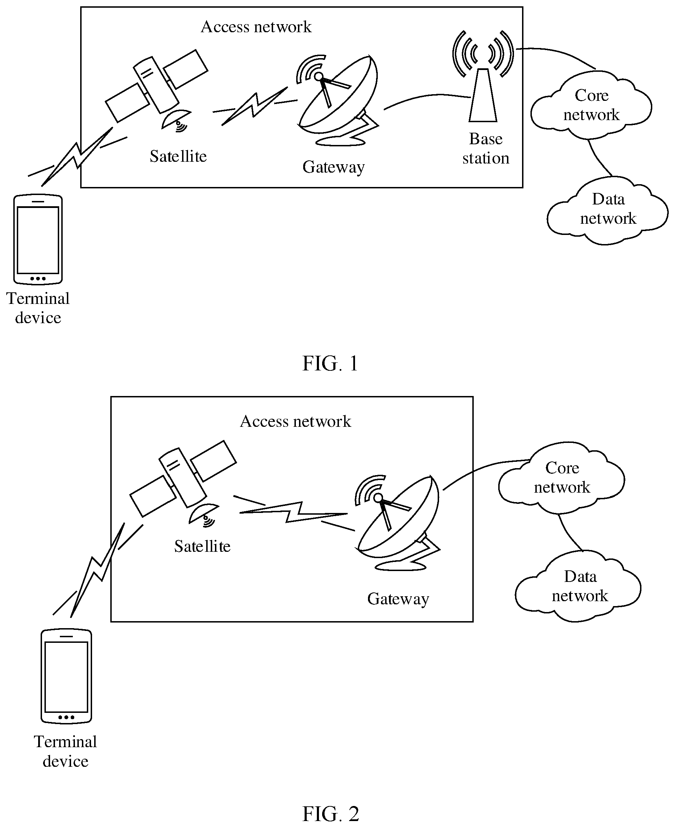

For example, FIG. 1 is a diagram of a structure of an NTN-based network architecture. The NTN-based network architecture includes a non-terrestrial network device, a gateway, a terrestrial base station, a terrestrial core network, and a terminal device. The non-terrestrial network device may be another non-terrestrial network device like a satellite or an HAPS. This is not limited herein. In this embodiment of this application, an example in which the non-terrestrial network device is a satellite is used for description. However, in this embodiment of this application, the satellite may alternatively be replaced with another non-terrestrial network device (for example, an HAPS). An NTN gateway (NTN gateway) (which is also referred to as a terrestrial station, an earth station, a signal gateway station, or a gateway station) may be used to connect the satellite and the base station. One or more satellites may be connected to one or more terrestrial base stations via one or more gateways. This is not limited herein. In FIG. 1, a communication mode of the satellite is a transparent (transparent) transmission mode. In other words, the satellite serves as an analog radio frequency repeater to implement radio frequency conversion and amplification, and may perform transparent transmission of or copy signals between the base station and the terminal. For example, signals sent by the terminal device may be transparently transmitted by the satellite and forwarded by the gateway to the terrestrial base station.

For another example, FIG. 2 is a diagram of another structure of an NTN-based network architecture. In FIG. 2, a communication mode of a satellite is a regenerative (regenerative) mode. In the regenerative mode, the satellite may serve as a base station to regenerate signals received from the ground, and may understand and process these signals. For example, the satellite may be a base station carried on an artificial earth satellite or a high altitude aircraft. The gateway may forward signaling between the satellite (namely, the base station) and a core network.

It should be noted that FIG. 2 shows only one satellite and one gateway. During actual use, an architecture with a plurality of satellites and/or a plurality of gateways may be used as required. Each satellite may provide a service for one or more terminal devices, each gateway may correspond to one or more satellites, and each satellite may correspond to one or more gateways. This is not specifically limited in this embodiment of this application.

The communication mode of the satellite is not limited in embodiments of this application. For example, the communication mode of the satellite may be the transparent transmission mode, or may be the regenerative mode.

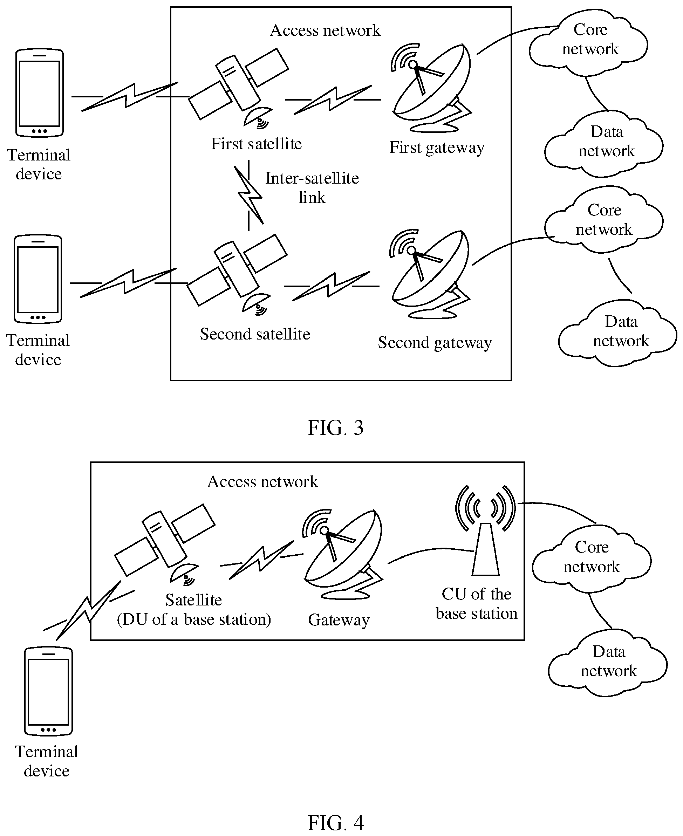

For another example, FIG. 3 is a diagram of still another structure of an NTN-based network architecture. In FIG. 3, two satellites (a first satellite and a second satellite) and two gateways (a first gateway and a second gateway) are used as an example. A communication mode of the two satellites is a regenerative mode. To be specific, the two satellites may serve as base stations. A difference between FIG. 3 and FIG. 2 lies in that an inter-satellite link (inter-satellite link, ISL) exists between the two satellites in FIG. 3. In this network architecture, different satellites may communicate with each other through the ISL. In addition, in FIG. 3, an example in which different satellites are connected to different terrestrial core networks is used. In addition, different satellites may alternatively be connected to a same terrestrial core network.

For another example, the satellite may alternatively serve as a DU of a base station, and is separated from a CU of a terrestrial base station, to form a CU-DU distributed architecture. FIG. 4 is a diagram of yet another structure of an NTN-based network architecture. A difference between FIG. 4 and FIG. 1 lies in that, in FIG. 4, as a DU of a base station, a satellite may understand, process, and regenerate signals from the ground instead of only performing transparent transmission of or copying the signals, and a terrestrial base station may serve as a CU of the base station. In this network architecture, a serving link between a terminal device and the satellite may be used for transmission of an NR-Uu radio interface signal, a feeder link between the satellite and a gateway is used for transmission of a satellite radio interface (satellite radio interface, SRI) signal, and transmission of an F1 interface signal between the DU and the CU is performed on the SRI signal.

For example, the network device is a base station in FIG. 4. The base station may communicate with the terminal device, or may communicate with the terminal device by using a relay station. The terminal device may communicate with a plurality of base stations that use different access technologies. For example, the network device is a satellite. The satellite may be connected to the base station by using a gateway. If a communication mode of the satellite is a transparent transmission mode, signals sent by the terminal device may be transparently transmitted by the satellite and forwarded by the gateway to a terrestrial base station. If a communication mode of the satellite is a regenerative mode, the satellite may serve as a base station to process signals sent by the terminal device.

Any one of the satellite architectures shown in FIG. 1 to FIG. 4 is applicable to the technical solutions in embodiments of this application. In addition, the satellite architecture described above is merely an example, and cannot limit an architecture to which the technical solutions in embodiments of this application are applicable.

In embodiments of this application, a communication apparatus configured to implement a function of the network device may be a network device, may be a network device that has some functions of a base station, or may be an apparatus that can support the network device in implementing the function, for example, a chip system. The apparatus may be installed in the network device.

For example, satellites may be classified into a highly elliptical orbit (highly elliptical orbit, HEO) satellite, a geostationary orbit (geostationary orbit, GEO) satellite (which may be referred to as a high orbit satellite or a geostationary satellite), a low earth orbit (low earth orbit, LEO) satellite (which may be referred to as a low orbit satellite), a medium earth orbit (medium earth orbit, MEO) satellite, and the like based on a satellite altitude, namely, a satellite orbit altitude.

A moving speed of the high orbit satellite is the same as the speed of the rotation of Earth, so that the high orbit satellite remains stationary relative to the ground. Correspondingly, coverage of the high orbit satellite also remains unchanged. The coverage of the high orbit satellite is large, for example, a diameter of coverage of a high orbit satellite cell is 500 km or greater than 500 km. A moving speed of the low orbit satellite is different from the speed of the rotation of Earth, and the moving speed of the low orbit satellite is greater than the speed of the rotation of Earth. For example, the moving speed of the low orbit satellite is 7 km/s. It can be seen that the low orbit satellite moves faster than Earth, and service coverage provided by the low orbit satellite also moves accordingly.

The low orbit satellite has two terrestrial mapping manners: a quasi-earth-fixed cell (quasi-earth-fixed cell) and an earth mobile cell (earth moving cell). The quasi-earth-fixed cell is also referred to as a fixed cell, and the earth mobile cell is also referred to as a moving cell.

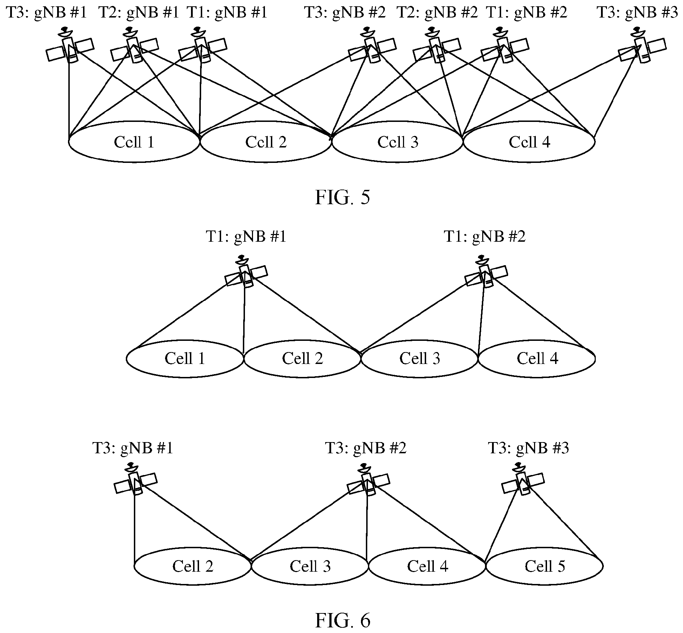

FIG. 5 is a diagram of coverage of a low earth orbit satellite. FIG. 5 is a diagram of a mapping manner of a fixed cell of a low orbit satellite. The mapping manner of the fixed cell may also be referred to as a mapping manner of an earth-fixed cell. The mapping manner means that locations of cells on the ground are fixed, and the low orbit satellite covers these fixed cells on the ground by adjusting a direction of a satellite beam of the low orbit satellite. For example, a network device is a gNB. A physical cell identifier (physical cell identifier, PCI) 1 indicates a cell 1, a PCI 2 indicates a cell 2, a PCI 3 indicates a cell 3, and a PCI 4 indicates a cell 4. The cell 1 and the cell 2 are covered by beams of a gNB #1, and the cell 3 and the cell 4 are covered by beams of a gNB #2. Because the low orbit satellite moves fast in relative to the ground of the earth, in comparison with a moment T1, the gNB #1 and the gNB #2 move leftwards at a moment T2. At the same time, the gNB #1 and the gNB #2 correspondingly adjust beam directions of the gNB #1 and the gNB #2, so that the cell 1, the cell 2, the cell 3, and the cell 4 are all covered by the beams to a maximum extent. In comparison with the moment T1, both the gNB #1 and the gNB #2 have moved for long distances at a moment T3. At the moment T3, the gNB #1 cannot cover the cell 2 by adjusting the beam, and the cell 2 is in coverage of the gNB #2, that is, the gNB #2 covers the cell 2 at the moment T3. At the moment T3, the gNB #2 cannot cover the cell 4 by adjusting the beam, and the cell 4 is in coverage of the gNB #3, that is, the gNB #3 covers the cell 4.

FIG. 6 is a diagram of other coverage of a low earth orbit satellite. FIG. 6 shows a mapping manner of a moving cell of a low orbit satellite. The mapping manner of the moving cell may also be referred to as a mapping manner of an earth moving cell. A network device does not adjust a beam direction with time. A beam of the network device moves on the ground as the network device moves. For example, the network device is a gNB in FIG. 6. A PCI 1 indicates a cell 1, a PCI 2 indicates a cell 2, a PCI 3 indicates a cell 3, a PCI 4 indicates a cell 4, and a PCI 5 indicates a cell 5. At a moment T1, beams of a gNB #1 and a gNB#2 can cover the cell 1, the cell 2, the cell 3, and the cell 4. At a moment T3, the cell 1, the cell 2, the cell 3, and the cell 4 are covered by beams of the gNB #1, the gNB #2, and a gNB #3.

In this application, a first cell may be a serving cell of a terminal device, or a first cell may be a camping cell of a terminal device. A second cell is a neighbor cell of the first cell or a cell that can provide a service for the terminal device. The first cell may be a TN cell or an NTN cell, and the second cell may be a TN cell or an NTN cell. In this application, the first cell is a cell of one type, and the first cell may be one or more cells. The second cell is a cell of one type, and the second cell may be one or more cells. This is not limited in this application.

For example, when the terminal device is in a range of the first cell, and the first cell provides a service for the terminal device, the terminal device may need to reselect another cell (for example, the second cell) due to movement of the terminal device. In this case, the terminal device needs to perform cell measurement, to ensure a service requirement of the terminal device. The cell reselected by the terminal device usually can provide a better service than the first cell. The reselected cell may be a neighbor cell (or referred to as a neighboring cell) of the first cell, or may not be limited to a neighboring cell of the first cell, provided that the cell can provide a service for the terminal device. Usually, in a cell reselection process of the terminal device, a cell measurement criterion in the reselection process of the terminal device is specified in a protocol, to reduce energy consumption. For example, according to a priority criterion, when a priority of a frequency of the second cell is higher than a priority of a frequency of the first cell, the terminal device performs cell measurement on the second cell, and determines whether the second cell can provide a better service for the terminal device.

It can be learned from the foregoing descriptions in FIG. 5 and FIG. 6 that, in the NTN network, because the satellite moves, a cell or a network device that provides a service for the terminal device may continuously change, and the terminal device may also need to continuously perform cell reselection and cell measurement. Based on the mapping manner of the fixed cell and the mapping manner of the moving cell, the terminal device performs cell reselection, and measures, in a cell reselection process, whether a neighbor cell of the first cell in which the terminal device is located or a cell that can provide a service for the terminal device meets the requirement of the terminal device, to maintain quality of service between the terminal device and the network device.

In this application, cell measurement may be performed by a terminal device in an idle mode (RRC_IDLE) or an inactive mode (RRC_INACTIVE), or a terminal device in a connected mode (RRC_CONNECTED). This is not limited in this application. In this application, a terminal device in an idle mode is used as an example to describe cell measurement of the terminal device in detail. It should be understood that this example is merely an example, and constitutes no limitation on this application.

In an earth-fixed cell scenario, the network device may broadcast, in a system information block (system information block 19, SIB 19), information about a reference point and a distance threshold (which is referred to as a first threshold, D1 for short, in embodiments of this application) of a neighbor cell, to perform cell reselection. The terminal device calculates a distance between the terminal device and the reference point of the first cell based on location information of the terminal device. When the distance between the terminal device and the reference point is less than D1, it indicates that the terminal device is in a central area of the first cell. When the distance between the terminal device and the reference point is greater than or equal to D1, it indicates that the terminal device is not in the central area of the first cell.

In this application, the reference point of the cell is located at a central location of the cell or another location of the cell. An area that is at a specific distance around the reference point of the cell may be referred to as a central area. The central area may be a circular area, an elliptical area, or any other closed graphic area. This is not limited in this application.

Based on comparison between the D1 threshold and the distance between the terminal device and the reference point by the terminal device, in a cell reselection criterion of the terminal device, there may be the following several possibilities:
1. When the priority of the frequency corresponding to the second cell is higher than the priority of the frequency corresponding to the first cell, the terminal device may ignore a value of D1 and the distance between the terminal device and the reference point, and perform cell measurement on the second cell.
2. When the priority of the frequency corresponding to the second cell is less than or equal to the priority of the frequency corresponding to the first cell, quality of service of the first cell meets Srxlev>SnonIntraSearchP and Squal>SnonIntraSearchQ, and the distance between the terminal device and the reference point is greater than or equal to D1, the terminal device performs cell measurement on the second cell. When quality of service of the first cell does not meet Srxlev>SnonIntraSearchP and Squal>SnonIntraSearchQ, the terminal device may ignore the value of D1 and the distance between the terminal device and the reference point, and perform cell measurement on the second cell.
   Srxlev indicates a cell search received power, SnonIntraSearchP and Squal indicate an inter-frequency/inter-RAT measurement start threshold, and SnonIntraSearchQ indicates an inter-frequency/inter-RAT measurement start threshold.
3. When a frequency corresponding to the second cell and a frequency corresponding to the first cell are intra-frequency frequencies, quality of service of the first cell meets Srxlev>SIntraSearchP and Squal>SIntraSearchQ, and the distance between the terminal device and the reference point is greater than or equal to D1, the terminal device performs cell measurement on the second cell. When quality of service of the first cell does not meet Srxlev>SIntraSearchP and Squal>SIntraSearchQ, the terminal device may ignore the value of D1 and the distance between the terminal device and the reference point, and perform cell measurement on the second cell.

Srxlev indicates a cell search received power, SIntraSearchP and Squal indicate an intra-frequency/intra-RAT measurement start threshold, and SIntraSearchQ indicates an intra-frequency/intra-RAT measurement start threshold.

In the foregoing cell reselection criterion of the terminal device, for the mapping manner of the fixed cell, the cell on the ground does not move with movement of the satellite, and the reference point of the cell is a fixed location in the cell range. For example, the reference point of the cell may be a central location of the cell. In the foregoing cell reselection criterion of the terminal device, for the mapping manner of the moving cell, because the beam direction of the satellite does not change when the satellite moves, a cell covered by the beam of the satellite changes with movement of the satellite. The reference point of the cell also changes, for example, the reference point of the cell may be a central location or another location of the cell. The reference point of the cell moves with movement of the cell, and a moving path of the reference point is the same as a movement path of the cell, or a movement path of the reference point is the same as a movement path of the satellite.

In an implementation, in the mapping manner of the mobile cell, when the terminal device is in the range of the first cell, and the distance between the terminal device and the reference point location of the first cell is greater than or equal to D1, the terminal device performs cell measurement on the second cell. However, due to movement of the satellite, the reference point of the first cell approaches the terminal device, the terminal device also approaches the reference point of the first cell, and the terminal device is about to enter the central area of the cell, that is, the distance between the terminal device and the reference point of the first cell is less than D1. In this case, cell measurement performed by the terminal device is invalid measurement, and energy consumption of the terminal device is wasted.

In an implementation, in the mapping manner of the moving cell, the reference point of the first cell moves with movement of the satellite, and the moving path of the reference point of the first cell is predictable. The terminal device also moves, and a moving path of the terminal device is predictable. When the terminal device is in the range of the first cell, and the distance between the terminal device and the reference point location of the first cell is greater than or equal to D1 at a current moment, the terminal device performs cell measurement on the second cell. However, due to movement of the satellite and the terminal device, the reference point of the first cell approaches the terminal device, the terminal device also approaches the reference point of the first cell, and the terminal device is about to enter the central area of the cell, that is, the distance between the terminal device and the reference point of the first cell is less than D1. In this case, cell measurement performed by the terminal device is invalid measurement, and energy consumption of the terminal device is wasted.

In another implementation, in the mapping manner of the fixed cell, the location of the reference point of the first cell is fixed. The terminal device may move at a high speed or at a low speed. When the terminal device moves at a high speed, the moving path of the terminal device is predictable. For example, the terminal device is on a high-speed railway, and the terminal device moves at a high speed relative to the first cell. The moving path of the terminal device approaches the reference point of the cell, that is, the terminal device may be in an edge area of the first cell at a moment t0, and the terminal device is in the central area of the first cell at a moment t1. The terminal device approaching a location of the reference point of the first cell performs cell measurement at the moment t0. In this case, cell measurement is invalid, and energy consumption of the terminal device is wasted.

For the foregoing problem, this application provides a communication method, to avoid a waste of energy consumption of the terminal device caused by invalid measurement of the terminal device.

It may be understood that the method provided in this application may be performed by a terminal device or a network device, or may be performed by an apparatus like a chip used in a terminal device or an access network device. In this application, the communication method provided in this application is described by using an example in which an execution body is a terminal device and a network device.

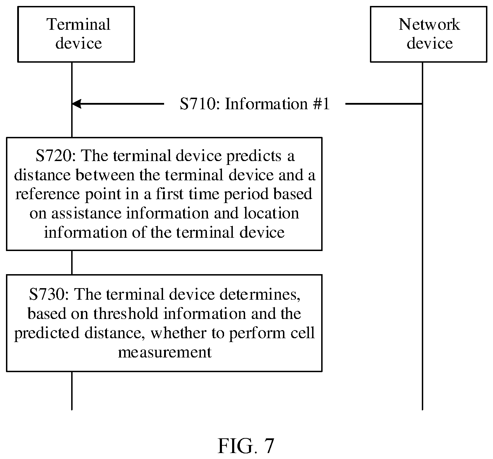

FIG. 7 is a schematic flowchart of a communication method in the foregoing moving cell scenario or fixed cell scenario according to an embodiment of this application.

S710: A terminal device receives information #1 from a network device.

Correspondingly, the network device sends the information #1 to the terminal device.

The information #1 includes assistance information used to determine a reference point of a first cell. The information #1 may be sent by the network device to the terminal device via system information, or may be sent to the terminal device via RRC dedicated signaling. This is not limited in this application.

In an implementation, the assistance information includes one or more of the following: location information of the reference point, time information of the reference point, ephemeris information, and path information of the reference point.

The location information of the reference point may be explicitly indicated. For example, the network device directly sends the location information to the terminal device via the system information or sends the location information to the terminal device via the RRC dedicated signaling. Alternatively, the location information may be implicitly indicated. The terminal device and the network device may alternatively agree on a location, for example, a sub-satellite point, where the sub-satellite point may be an intersection of a line from the center of Earth to a satellite and the surface of Earth, and is represented by a geographical longitude and latitude. The time information of the reference point may be reference time in the ephemeris information. The reference time in the ephemeris information is time associated with ephemeris data, and may be displayed epoch time. The reference time may be implicitly indicated, for example, is not carried. The reference time may be a moment agreed by the network device and the terminal, and may be an end moment of scheduling of the system information. The time information of the reference point may alternatively be time associated with a moment at a location of the reference point, and the time may be epoch time, absolute time such as coordinated universal time, or relative time. The time information of the reference point may indicate time associated with the location of the reference point.

The ephemeris information is data used to describe a location and a velocity state vector of the satellite, or may be orbit data, and the ephemeris information is mainly used to determine location information of the satellite. The ephemeris information includes one or more of the following information: a flight orbit of a satellite, a flight speed of a satellite, a height of a satellite, a networking mode, a location of a satellite, or time information corresponding to a location of a satellite. In the moving cell scenario, a moving path of the cell is the same as a moving path of the satellite. The ephemeris information includes path information of the satellite, and the path information of the satellite is the same as path information of the reference point of the first cell.

It can be learned that the network device may indirectly describe the path information of the reference point based on the ephemeris information, or the network device directly sends the path information of the reference point to the terminal device via system information (for example, an SIB 19) or RRC dedicated signaling. The path information of the reference point means that in the moving cell scenario, a location of the cell moves with movement of the satellite, and the reference point of the cell also moves with movement of the cell. The path information of the reference point may be the same as the path information of the satellite. This is not limited in this application. In the fixed cell scenario, the location of the cell is fixed, and the reference point is also fixed. Therefore, in the fixed cell scenario, the reference point has no path information.

It should be understood that the terminal device is located in the first cell, and the first cell is a camping cell or a serving cell of the terminal device. The first cell is the moving cell or the fixed cell described above. This is not limited in this application.

S720: The terminal device predicts a distance between the terminal device and the reference point in a first time period based on the assistance information and location information of the terminal device.

Specifically, after receiving the information #1 from the network device, the terminal device predicts the distance between the terminal device and the reference point in the first time period based on the location information of the terminal device and the assistance information that is in the information #1 and that is used to determine the reference point of the first cell. A terminal device that supports a global navigation satellite system (global navigation satellite system, GNSS) capability may obtain the location information of the terminal device by using a positioning module, for example, a global positioning system (global positioning system, GPS) module or another type of positioning module. Alternatively, the terminal device requests to obtain the location information of the terminal device from another device. This is not limited in this application.

For example, the assistance information includes information such as a moving speed and a moving direction of the reference point, and the location information of the terminal device includes information such as a moving speed and a moving direction of the terminal device. Therefore, the terminal device may predict the distance between the terminal device and the reference point in the first time period based on an expectable moving path like the moving speed and the moving direction of the reference point and an expectable moving path like the moving speed and the moving direction of the terminal device when the terminal device moves.

Alternatively, that the terminal device predicts a distance between the terminal device and the reference point in a first time period based on the assistance information and location information of the terminal device may be referred to as estimating the distance between the terminal device and the reference point in the first time period, or may be referred to as forecasting the distance between the terminal device and the reference point in the first time period, or may be referred to as inferring the distance between the terminal device and the reference point in the first time period. In other words, the terminal device may determine, based on the assistance information of the reference point and the location information of the terminal device, the distance between the terminal device and the reference point in a time period after a current moment. The current moment may be a moment at which the terminal device moves to a current location, for example, a moment at which the terminal device moves to a first location in the first cell. The moment may be Greenwich Mean Time. The current moment may alternatively be understood as a moment at which the terminal device performs measurement.

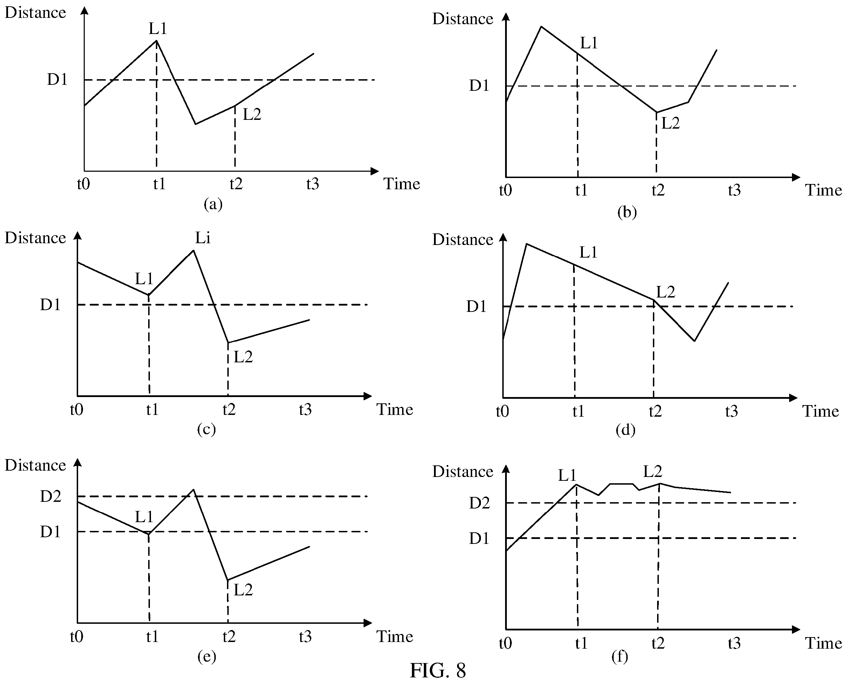

For example, it is assumed that the current moment is t0, the first time period may be a time period starting from the moment t0. For example, as shown in any diagram in FIG. 8, a time period between the moment t0 and a moment t1 is the first time period. The first time period may alternatively be a time period in a future time period after the moment t0. For example, a time period between the moment t1 and a moment t2 is the first time period, that is, the first time period starts at the moment t1 and ends at the moment t2. The moment t1 is later than the moment t0, and the moment t2 is later than the moment t1.

It should be understood that the first time period may be determined by the terminal device, or may be broadcast by the network device via a broadcast message, or may be sent via an RRC dedicated signaling message, or may be sent via other indication information. This is not limited in this application.

S730: The terminal device determines, based on threshold information and the predicted distance, whether to perform cell measurement.

Specifically, the terminal device may determine, based on the predicted distance between the terminal device and the reference point in the first time period and the threshold information, whether to perform cell measurement. The threshold information includes a first threshold, and the first threshold may be understood as the foregoing distance threshold D1 broadcast by the network device in the SIB 19.

It should be understood that the cell measurement may be that the terminal device performs cell measurement on a neighbor cell of the first cell, or may be that the terminal device performs cell measurement on another cell (not limited to a neighbor cell) that can provide a service for the terminal device. The cell measurement means that the terminal device measures a cell, or the terminal device measures a frequency corresponding to a cell. The frequency corresponding to the cell may be sent to the terminal device through broadcasting by the network device, or the terminal device obtains the frequency corresponding to the cell from an RRC message sent by the network device. In embodiments of this application, the cell measurement means that the terminal device measures a corresponding frequency, and a purpose of the cell measurement is to measure a neighboring cell or a cell that provides a better service for the terminal device.

In an implementation, when the terminal device predicts, based on the assistance information and the location information, that the distance between the terminal device and the reference point is greater than or equal to D1 in the first time period, the terminal device determines to perform cell measurement.

For example, the first time period is a time period from t1 to t2, a distance between the terminal device and the reference point at any moment in the time period from t1 to t2 is Ln, and n is a positive integer. If Ln is greater than or equal to D1, it may be considered that the distance between the terminal device and the reference point is always greater than or equal to D1 in the time period from t1 to t2, and the terminal device performs cell measurement.

For another example, the first time period is a time period from t1 to t2, the time period from t1 to t2 is divided into m time points according to a first rule, and m is a positive integer. The terminal device determines, based on predict distances between the terminal device and the reference point at the m time points, whether to perform cell measurement. The first rule may be evenly dividing the first time period into m time points, or unevenly dividing the first time period into m time points. A specific division rule is not limited in this application. For example, the time period from t1 to t2 is divided into 10 time points according to the first rule. The terminal device predicts that distances between the terminal device and the reference point are greater than or equal to D1 at 8 of the 10 time points, and distances between the terminal device and the reference point at the other two time points are less than D1. The terminal device determines that 8 is greater than or equal to a first preset value, and the terminal device determines to perform cell measurement. The first preset value may be determined by the network device and the terminal device according to a protocol, or may be sent by the network device to the terminal device, or may be determined by the terminal device. This is not limited in this application.

For another example, the terminal device predicts the distance between the terminal device and the reference point in the first time period. The first time period includes all time of the terminal device in coverage of the first cell. The terminal device predicts that a distance between the terminal device and the reference point is less than the first threshold at the moment t1, a distance between the terminal device and the reference point is less than the first threshold at the moment t2, and a distance between the terminal device and the reference point is greater than the first threshold at the moment t3 in the first time period (for example, a start moment of the first time period is t1, an end moment is t3, t2 is any moment in the first time period, and t1<t2<t3). When the terminal device determines whether to perform cell measurement, and it is considered that the distance between the terminal device and the reference point in the time period from t1 to t2 is less than the first threshold, the terminal device does not perform cell measurement. In other words, the terminal device may use, as a determining condition, a predicted distance in a time period in the first time period to determine whether to perform cell measurement, and does not necessarily need to use, as a determining condition, a distance at an end moment of the first time period to determine whether to perform cell measurement.

A case in which the terminal device determines not to perform cell measurement in embodiments of this application includes: The terminal device does not perform cell measurement at a current moment, which does not mean that the terminal device does not perform cell measurement at any future moment; or the terminal device performs relaxed measurement at a current moment, for example, the terminal device prolongs a measurement period, reduces a quantity of measurement times, changes a priority of a measured frequency, or increases a threshold for performing measurement by the terminal device.

In another implementation, if it is predicted that the distance between the terminal device and the reference point is less than D1 at the end moment of the first time period, the terminal device determines not to perform cell measurement.

For example, the first time period is a time period from t1 to t2, and t2 is the end moment of the first time period. As shown in (a) in FIG. 8, if the distance between the terminal device and the reference point is L2 at the moment t2, and L2 is less than D1, the terminal device does not perform cell measurement. A distance between the terminal device and the reference point at a moment other than the moment t2 may not be used as a condition for the terminal device to determine whether to perform cell measurement. For example, a distance between the terminal device and the reference point at the start moment t1 of the first time period or at another moment in the first time period may be greater than or equal to D1, or may be less than D1.

In another implementation, when predicting that the distance between the terminal device and the reference point continuously decreases in the first time period, and the distance between the terminal device and the reference point is less than D1 at the end moment of the first time period, the terminal device determines not to perform cell measurement.

For example, the distance between the terminal device and the reference point continuously decreases in the first time period from t1 to t2, and the distance between the terminal device and the reference point is less than D1 at the end moment t2. For example, as shown in (b) in FIG. 8, in the time period from t1 to t2, the distance between the terminal device and the reference point decreases from L1 to L2. The terminal device determines that a distance at a previous moment is greater than a distance at a next moment, the distance between the terminal device and the reference point continuously decreases in the first time period, and the terminal device determines that the distance L2 between the terminal device and the reference point is less than D1 at the moment t2. In this case, the terminal device does not perform cell measurement.

For another example, the distance between the terminal device and the reference point continuously changes (for example, the distance first continuously increases, and then decreases) in the first time period from t1 to t2, and the distance between the terminal device and the reference point is less than D1 at the end moment t2. For example, as shown in (c) in FIG. 8, in the time period from t1 to t2, the distance between the terminal device and the reference point first increases from L1 to Li, and then decreases from Li to L2. Both L1 and Li may be greater than or equal to D1, or both L1 and Li may be less than D1, and L2 is less than D1. The distance L2 between the terminal device and the reference point is less than D1 at the end moment t2, and the terminal device does not perform cell measurement.

It should be understood that the moving path of the terminal device relative to the reference point may be linear motion, curvilinear motion, or spiral motion. This is not limited in this application.

In another implementation, if it is predicted that the distance between the terminal device and the reference point continuously decreases in the first time period, and the distance between the terminal device and the reference point is greater than or equal to D1 at the end moment of the first time period, the terminal device determines to perform cell measurement.

For example, the distance between the terminal device and the reference point continuously decreases in the first time period from t1 to t2, and the distance between the terminal device and the reference point is greater than or equal to D1 at the end moment t2. For example, as shown in (d) in FIG. 8, in the time period from t1 to t2, the distance between the terminal device and the reference point decreases from L1 to L2. The terminal device determines that a distance at a previous moment is greater than a distance at a next moment, the distance between the terminal device and the reference point continuously decreases in the first time period, and the terminal device determines that the distance L2 between the terminal device and the reference point is greater than D1 at the moment t2. In this case, the terminal device does not perform cell measurement.

In an implementation, the threshold information may further include a second threshold (which is referred to as D2), and the second threshold is greater than the first threshold. The second threshold and the first threshold are used together by the terminal device to determine whether to perform cell measurement, to improve accuracy of a determining process, avoid invalid cell measurement, and avoid missing of cell measurement that needs to be performed.

Specifically, when the second threshold is introduced, the terminal device may determine, based on the threshold information and the distance between the terminal device and the reference point, whether to perform cell measurement in the following several cases:

### Case 1:

A distance L between a location of the terminal device at the current moment, namely, a current location of the terminal device, and the reference point is greater than or equal to D1, and is less than the second threshold D2. In other words, D2>L≥D1.

In an implementation, if it is predicted that the distance between the terminal device and the reference point is less than D1 at the end moment of the first time period, the terminal device does not perform cell measurement.

For example, the first time period is a time period from t1 to t2, and t2 is the end moment of the first time period. As shown in (e) in FIG. 8, if the distance between the terminal device and the reference point is L2 at the moment t2, and L2 is less than D1, the terminal device does not perform cell measurement. A distance between the terminal device and the reference point at a moment other than the moment t2 may not be used as a condition for the terminal device to determine whether to perform cell measurement.

In another implementation, the distance between the terminal device and the reference point is greater than or equal to D1 in the first time period, and the terminal device performs cell measurement.

For example, the first time period is a time period from t1 to t2, a distance between the terminal device and the reference point at any moment in the time period from t1 to t2 is Ln, and n is a positive integer. If Ln is greater than or equal to D1, it may be considered that the distance between the terminal device and the reference point is always greater than or equal to D1 in the time period from t1 to t2, and the terminal device performs cell measurement.

For another example, the first time period is a time period from t1 to t2, the time period from t1 to t2 is divided into m time points according to a first rule, and m is a positive integer. The terminal device determines, based on predict distances between the terminal device and the reference point at the m time points, whether to perform cell measurement. The first rule may be evenly dividing the first time period into m time points, or unevenly dividing the first time period into m time points. A specific division rule is not limited in this application.

### Case 2:

When the distance between the location of the terminal device at the current moment, namely, the current location of the terminal device, and the reference point is greater than or equal to D2, the terminal device may directly perform cell measurement, and does not need to predict the distance between the terminal device and the reference point in the first time period, and determine, based on the predicted distance, whether to perform measurement. In this implementation, step S702 and step S703 may be replaced with step S702'. Step S702': When the distance between the terminal device and the reference point is greater than or equal to D2, the terminal device performs cell measurement.

### Case 3:

The terminal device predicts that the distance L between the terminal device and the reference point in the first time period is greater than or equal to the first threshold D1. In other words, D1≤L. In the case 3, the terminal device may not consider whether the distance between the current location of the terminal device and the reference point is greater than D1 or D2, that is, whether the distance between the current location of the terminal device and the reference point is greater than D1 or D2 is not limited. Instead, the terminal device predicts the distance between the terminal device and the reference point in the first time period, to determine whether to perform measurement.

In an implementation, if it is predicted that the distance between the terminal device and the reference point is greater than or equal to D1 and less than D2 in the first time period, namely, D2>L≥D1, the terminal device performs cell measurement.

In an implementation, if it is predicted that the distance between the terminal device and the reference point is greater than or equal to D2 in the first time period, the terminal device performs cell measurement.

For example, the first time period is a time period from t1 to t2, a distance between the terminal device and the reference point at any moment in the time period from t1 to t2 is Ln, and n is a positive integer. As shown in (f) in FIG. 8, Ln is greater than or equal to D2. It may be considered that the distance between the terminal device and the reference point is always greater than D2 in the time period from t1 to t2, and the terminal device performs cell measurement.

For another example, the first time period is a time period from t1 to t2, the time period from t1 to t2 is divided into m time points according to the first rule, m=1, 2, 3, ..., or the like, and m is a positive integer. The terminal device determines, based on distances at the m time points, whether to perform cell measurement. The first rule may be evenly dividing the first time period into m time points, or unevenly dividing the first time period into m time points. A specific division rule is not limited in this application. For example, the time period from t1 to t2 is divided into 10 time points according to the first rule. The terminal device predicts that distances between the terminal device and the reference point are greater than or equal to D2 at 6 of the 10 time points, and distances between the terminal device and the reference point at the other four time points are less than D2. The terminal device determines that 6 is greater than or equal to a second preset value, and the terminal device determines to perform cell measurement. The second preset value may be determined by the network device and the terminal device according to a protocol, or may be sent by the network device to the terminal device, or may be determined by the terminal device. This is not limited in this application. It can be learned that the threshold information includes D1 and D2. When predicting that the distance between the terminal device and the reference point is greater than or equal to D2 in the first time period, the terminal device may be located in an edge area of the cell in a future time period. In this case, the terminal device determines to perform cell measurement, and selects a cell that can provide a better service for the terminal device. This improves communication quality of the terminal device.

In an implementation, in the method shown in FIG. 7, before step S720 and step S730, the method may further include the following step:
The terminal device receives first indication information from the network device.

Specifically, the terminal device may receive the first indication information from the network device before step S710, or may receive the first indication information after step S710, or may simultaneously send the first indication information and the first information in step S710 to the terminal device. This is not limited in this application. The network device may deliver the first indication information in system information, RRC dedicated signaling, or another message. This is not limited in this application.

The first indication information indicates whether the terminal device predicts the distance between the terminal device and the reference point in the first time period (that is, the terminal device determines, based on the first indication information, whether to perform step S720) based on the assistance information and the location information of the terminal device, and/or the first indication information further indicates whether the terminal device determines, based on the threshold information and the distance, whether to perform cell measurement (that is, the terminal device determines, based on the first indication information, whether to perform step S730).

In an implementation, the first indication information indicates the terminal device to predict the distance between the terminal device and the reference point in the first time period based on the assistance information and the location information of the terminal device; or the first indication information indicates the terminal device not to predict the distance between the terminal device and the reference point in the first time period based on the assistance information and the location information of the terminal device. For example, a value of the first indication information may be a Boolean value. For example, when the value of the first indication information is "true", the first indication information indicates the terminal device to predict the distance between the terminal device and the reference point in the first time period based on the assistance information and the location information of the terminal device; or when the value of the first indication information is "false", the first indication information indicates the terminal device not to predict the distance between the terminal device and the reference point in the first time period based on the assistance information and the location information of the terminal device.

In another implementation, the first indication information indicates the terminal device to predict the distance between the terminal device and the reference point in the first time period based on the assistance information and the location information of the terminal device. When the terminal device receives the first indication information from the network device, the terminal device predicts the distance between the terminal device and the reference point in the first time period based on the assistance information and the location information of the terminal device. If the terminal device does not receive the first indication information from the network device, or the first indication information indicates a field is null, the terminal device does not predict the distance between the terminal device and the reference point in the first time period based on the assistance information and the location information of the terminal device.

For example, the first indication information may be a field including a predetermined quantity of bits, for example, a field including 1 bit. When a value of the indication bit is "1", the terminal device predicts the distance between the terminal device and the reference point in the first time period based on the assistance information and the location information of the terminal device. When the value of the indication bit is "0", the terminal device does not predict the distance between the terminal device and the reference point in the first time period based on the assistance information and the location information of the terminal device.

That the first indication information indicates whether the terminal device determines, based on the threshold information and the distance, whether to perform cell measurement is similar to that the first indication information indicates whether the terminal device predicts the distance between the terminal device and the reference point in the first time period, and whether the terminal device determines, based on the threshold information and the distance, whether to perform cell measurement. Details are not described herein again.

This is similar to that the first indication information indicates the terminal device whether to predict the distance between the terminal device and the reference point in the first time period based on the assistance information and the location information of the terminal device. Details are not described herein again.

In an implementation, the first indication information further indicates the start moment and the end moment of the first time period, or the first indication information indicates the start moment and duration (duration) of the first time period, so that the terminal device predicts the distance between the terminal device and the reference point in a representative first time period. This avoids invalidity of the distance, predicted by the terminal device, between the terminal device and the reference point. For example, the distance, predicted by the terminal device, between the terminal device and the reference point in the first time period is always greater than or equal to the first threshold, but the distance between the terminal device and the reference point is less than the first threshold at a next moment after the end moment of the first time period. In this case, if the terminal device uses, as a determining condition for cell measurement, the distance predicted based on the first time period, the terminal device performs cell measurement. However, the cell measurement performed by the terminal device is invalid, and the distance, predicted by the terminal device, between the terminal device and the reference point in the first time period is not representative.

The first indication information may be sent by the network device to the terminal device via a system information block, or may be sent to the terminal device in another manner (for example, an RRC message). This is not limited in this application.

According to the method shown in FIG. 7 and FIG. 8, the terminal device predicts the distance between the terminal device and the reference point in the first time period based on the location information of the terminal device and the assistance information of the reference point of the first cell, and then determines, based on the distance and the threshold information (for example, the first threshold or the second threshold), whether to perform cell measurement. The distance in the first time period is predicted, and whether to perform cell measurement is determined based on the distance and the threshold information, to prevent the terminal device from performing invalid cell measurement, for example, prevent the terminal device from performing cell measurement when moving towards the reference point of the cell. This reduces energy consumption of the terminal device.

Usually, when both an NTN cell and a TN cell exist, a priority of a frequency corresponding to the TN cell configured by the network device is higher than a priority of a frequency corresponding to the NTN cell, and the terminal device priorly measures the TN cell. For example, coverage of a cell in an NTN is completely or partially the ocean, that is, only a part of the coverage of the cell in the NTN covers a TN cell. For example, a GEO cell has a diameter of 500 km, and only a part of the coverage of the cell has a TN cell. When the terminal device moves to an area in which a TN cell exists, theoretically, the terminal device needs to switch to the TN cell, to better save energy. If there is a TN cell near a location of the terminal device, the terminal device priorly measures the TN cell. If there is no TN cell near the terminal device, it is invalid for the terminal device to measure the TN cell. However, because a priority of a frequency corresponding to the TN cell is higher than a priority of a frequency corresponding to the NTN cell, the terminal device also measures the TN cell. Consequently, the terminal device generates a large amount of energy consumption.

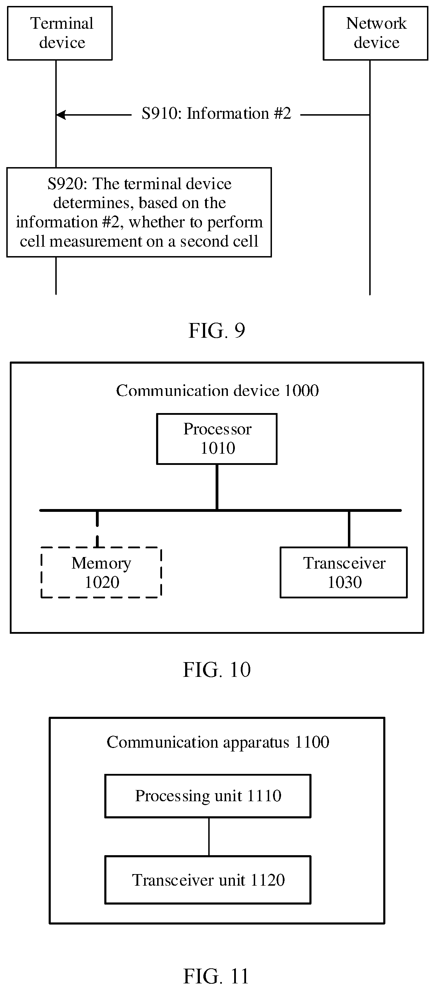

For the foregoing technical problem, FIG. 9 is a schematic flowchart of another communication method according to an embodiment of this application, to prevent the terminal device from performing invalid measurement on a TN cell when there is no TN cell in a part of coverage of an NTN serving cell in which the terminal device is located.

S910: A terminal device receives information #2 from a network device.

Correspondingly, the network device determines the information #2, and sends the information #2 to the terminal device.

The information #2 indicates whether a cell #1 exists in coverage of a first beam corresponding to a serving cell of the terminal device, a type of the cell #1 includes a TN cell or an NTN cell, and the first beam may be a synchronization signal and physical broadcast channel block (synchronization signal and PBCH block, SSB) that is of the serving cell and that is sent by the network device. After the terminal device accesses the network device, the terminal device obtains an SSB index (SSB index), where the SSB index may also be referred to as a beam index (beam index). Alternatively, the first beam may be a serving beam, received by the terminal device, in a plurality of beams periodically sent by the cell in time domain, and the terminal device obtains a beam index corresponding to the serving beam. Each beam has a unique beam index in a beam sending period. Beams in all directions in the coverage of the cell are covered by different beams sent by the network device at a plurality of different moments. The network device sends a beam in one direction at a moment.

In an implementation, the information #2 indicates that a second cell exists in the coverage of the first beam corresponding to the serving cell of the terminal device, or the information #2 indicates that the cell #1 does not exist in the coverage of the first beam corresponding to the serving cell of the terminal device. For example, a value of the information #2 may be a Boolean value. For example, when the value of the information #2 is "true", it indicates that the cell #1 exists in the coverage of the first beam corresponding to the serving cell of the terminal device. When the value of the information #2 is "false", it indicates that the cell #1 does not exist in the coverage of the first beam corresponding to the serving cell of the terminal device.

In another implementation, the information #2 indicates that the cell #1 exists in the coverage of the first beam corresponding to the serving cell of the terminal device. When receiving the information #2 from the network device, the terminal device determines that the cell #1 exists in the coverage of the first beam corresponding to the serving cell. When the terminal device does not receive the information #2 from the network device, or the information #2 indicates that a field is null, the terminal device determines that the cell #1 does not exist in the coverage of the first beam corresponding to the serving cell of the terminal device.

For example, the information #2 may be a field including a predetermined quantity of bits, for example, an indication bit including 1 bit. When a value of the indication bit is "1", it indicates that the cell #1 exists in the coverage of the first beam corresponding to the serving cell of the terminal device. When the value of the indication bit is "0", it indicates that the cell #1 does not exist in the coverage of the first beam corresponding to the serving cell of the terminal device.

It should be understood that the first beam may belong to a beam set of the serving cell, and the beam set is a set including all/some beams in the coverage of the serving cell. The information #2 may further include index information of frequencies corresponding to the beam set and/or information about frequencies in the beam set. All beams in the beam set share indexes of the frequencies corresponding to the beam set and/or the information about the frequencies. For example, the beam set includes {beam 1, beam 2, beam 3}, and the frequencies corresponding to the beam set are {f1, f2, f3}. The terminal device measures that the beam 2 is accessed, where the beam 2 belongs to the beam set {beam 1, beam 2, beam 3}; and obtains, based on a correspondence between the beam set and the frequencies, that frequencies that need to be measured are {f1, f2, f3}.

It should be further understood that the information #2 may further include index information of a frequency corresponding to the first beam and/or information about a frequency in the first beam. For example, the network device sends the information #2 or broadcast system information in which the coverage or a coverage area of the first beam beam 1 has the frequency f1 and the frequency f2.

The information #2 may be broadcast by the network device to the terminal device via system information (for example, an SIB 19), or may be sent to the terminal device via RRC dedicated signaling or another message. This is not limited in this application.

S920: The terminal device determines, based on the information #2, whether to perform cell measurement on the cell #1.

Specifically, when receiving the information #2 from the network device, the terminal device determines, based on the information #2, whether to perform cell measurement on the cell #1.

In an implementation, the terminal device determines, based on the information #2, to perform cell measurement on the cell #1.

When the information #2 indicates that the cell #1 exists in the coverage of the first beam corresponding to the serving cell of the terminal device, the terminal device determines, based on the information #2, to perform cell measurement on the cell #1. When the information #2 indicates that the cell #1 does not exist in the coverage of the first beam corresponding to the serving cell of the terminal device, the terminal does not perform cell measurement on the cell #1.

It should be noted that, in this application, the cell #1 is not a specific cell, but is a cell of a same type, or may be a frequency of a cell of a same type. The cell #1 may include one or more cells of a same type. This application is not limited to performing cell measurement on a specific cell. For example, the cell #1 includes one or more TN cells or the cell #1 includes one or more NTN cells, and the cell measurement performed on the cell #1 includes measurement performed the on one or more TN cells or the one or more NTN cells.

In another implementation, the terminal device determines, based on the information #2, to measure a first frequency, where the first frequency is a frequency corresponding to the cell #1, or the first frequency is a frequency used by the cell #1.

For example, there is a correspondence between the first beam and the first frequency.

For example, the correspondence includes a correspondence between an index of the first beam and an index of the first frequency. For example, the network device broadcasts the index information of the frequency of the first beam beam 1 via the broadcast information. The frequency set is included in a cell-level frequency list, the cell-level frequency list may be delivered via system information, and the cell-level frequency list is queried via an index number, to obtain the information about the frequency. For example, five inter-frequency frequencies (namely, first frequencies): f1, f2, f3, f4, and f5 are sent via an interFreqCarrierFreqList field of an SIB 4. If indexes of the frequencies associated with the first beam beam 1 are 1 and 5, it indicates a 1^{st} frequency f1 and a 5^{th} frequency f5. If the index of the frequency is 2, it indicates a 2^{nd} frequency f2.

For example, the correspondence may further include a correspondence between the first beam and the first frequency. For example, the network device broadcasts the broadcast information in which the coverage or the coverage area of the first beam beam 1 has the frequency f1 and the frequency f2. For example, a field delivered by the system information is beam 1: f1, f2, and the system information indicates, via the foregoing field, that the coverage of the beam 1 includes the frequency f1 and the frequency f2.

It should be understood that the correspondence between the first beam and the first frequency may be managed in an operation, administration, and maintenance (operation, administration, and maintenance, OAM) device, and the OAM device sends the correspondence to the network device. Alternatively, the correspondence between the first beam and the first frequency may be pre-configured by a carrier in the network device. Alternatively, the network device generates the correspondence between the first beam and the first frequency through calculation based on a coverage path of the current first beam of the network device and pre-configured geographic coverage of a first cell. Alternatively, the OAM device sends geographic coverage of the first cell to the network device, and the network device generates the correspondence between the first beam and the first frequency through calculation based on the coverage of the first beam and the geographic coverage of the first cell.

It should be further understood that when the correspondence between the first beam and the first frequency changes, an update of the system information is not triggered.

In an implementation, the network device sends duration information or timer (timer) information of the correspondence between the first beam and the first frequency. After obtaining the duration information or the timer information delivered by the network device, the terminal device starts or restarts the timer. For example, when the terminal device has started a timer to record validity duration (validity duration) of the correspondence between the first beam and the first frequency, and the terminal device receives new duration information or a new timer, the terminal restarts the timer. The duration information is used to identify validity time of the correspondence between the first beam and the first frequency, or validity duration of the correspondence between the first beam and the first frequency. The duration information indicates maximum duration in which the terminal device uses the correspondence, or a maximum interval in which the terminal device does not need to re-obtain the correspondence. The terminal device determines validity of the correspondence between the first beam and the first frequency based on the validity time or the validity duration. Specifically, when the terminal device reads the correspondence between the first beam and the first frequency, the terminal device starts the timer. When the duration recorded by the timer exceeds the validity duration in the duration information, the terminal device re-obtains a correspondence between the first beam and the first frequency from the network device. Alternatively, before the duration recorded by the timer exceeds the validity duration in the duration information, the terminal device re-obtains a correspondence between the first beam and the first frequency from the network device.

The duration information is applicable to a terminal in an idle mode and a terminal in a connected mode. The validity duration in the duration information may be newly defined, or may reuse validity duration in ephemeris information, for example, uplink synchronization validity duration.

In the method shown in FIG. 9, the terminal device determines, based on the information #2 sent by the network device, whether to perform cell measurement. The information #2 indicates whether the cell #1 exists in the coverage of the first beam, to reduce invalid cell measurement performed by the terminal device. In addition, the information #2 can further indicate the frequency or the index of the frequency of the first beam, and the terminal device measures, based on the information #2, a frequency corresponding to the cell #1 in the first beam, to reduce energy consumption of the terminal device.

The foregoing describes in detail the communication methods provided in embodiments of this application with reference to FIG. 7 to FIG. 9. The following describes in detail the communication apparatuses provided in embodiments of this application with reference to FIG. 10 and FIG. 11.

A communication apparatus provided in embodiments of this application is described below in detail with reference to FIG. 10 and FIG. 11. It should be understood that descriptions of apparatus embodiments correspond to the descriptions of the method embodiments. Therefore, for content that is not described in detail, refer to the foregoing method embodiments. For brevity, a part of content is not described again.

In embodiments of this application, functional modules of a transmitter device or a receiver device may be obtained through division based on the foregoing method examples. For example, each functional module may be obtained through division based on each function, or two or more functions may be integrated into one processing module. The integrated module may be implemented in a form of hardware, or may be implemented in a form of a software functional module. It should be noted that, in embodiments of this application, module division is an example, and is merely logical function division. During actual implementation, another division manner may be used. An example in which the functional modules are divided based on the functions is used below for description.

FIG. 10 is a block diagram of a communication device 1000 according to this application. Any device like the terminal device and the network device in any method in FIG. 7 to FIG. 9 may be implemented by the communication device shown in FIG. 10.

It should be understood that the communication device 1000 may be a physical device, a component (for example, an integrated circuit or a chip) of the physical device, or may be a functional module in the physical device.

As shown in FIG. 10, the communication device 1000 includes one or more processors 1013. Optionally, the processor 1013 may invoke an interface to implement receiving and sending functions. The interface may be a logical interface or a physical interface. This is not limited. For example, the interface may be a transceiver circuit, an input/output interface, or an interface circuit. The transceiver circuit, the input/output interface, or the interface circuit that is configured to implement the receiving and sending functions may be separated, or may be integrated together. The transceiver circuit or the interface circuit may be configured to read and write code/data, or the transceiver circuit or the interface circuit may be configured to transmit or transfer a signal.

Optionally, the interface may be implemented through a transceiver. Optionally, the communication device 1000 may further include a transceiver 1030. The transceiver 1030 may also be referred to as a transceiver unit, a transceiver machine, a transceiver circuit, or the like, and is configured to implement a transceiver function.

Optionally, the communication device 1000 may further include a memory 1020. A specific deployment location of the memory 1020 is not specifically limited in this embodiment of this application. The memory may be integrated into the processor, or may be independent of the processor. When the device 1000 does not include the memory, the device 1000 only needs to have a processing function, and the memory may be deployed at another location (for example, a cloud system).

The processor 1010, the memory 1020, and the transceiver 1030 communicate with each other through an internal connection path, to transfer a control signal and/or a data signal.

It may be understood that, although not shown, the device 1000 may further include other apparatuses, for example, an input apparatus, an output apparatus, and a battery.

Optionally, in some embodiments, the memory 1020 may store execution instructions used to perform the method in embodiments of this application. The processor 1010 may execute the instructions stored in the memory 1020 and complete, in combination with other hardware (for example, the transceiver 1030), the steps performed in the following methods. For a specific working process and beneficial effect, refer to the descriptions in the foregoing method embodiments.

The methods disclosed in embodiments of this application may be applied to the processor 1010, or may be implemented by the processor 1010. The processor 1010 may be an integrated circuit chip and has a signal processing capability. In an implementation process, the steps of the method may be performed through a hardware integrated logic circuit in the processor or by using instructions in a form of software. The foregoing processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, or a discrete hardware component. It may implement or perform the methods, the steps, and logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. The software module may be located in a mature storage medium in the art, such as a random access memory (random access memory, RAM), a flash memory, a read-only memory (read-only memory, ROM), a programmable read-only memory, an electrically erasable programmable memory, or a register. The storage medium is located in the memory, and the processor reads instructions in the memory and completes the steps in the foregoing methods in combination with hardware of the processor.

It may be understood that the memory 1020 may be a volatile memory or a non-volatile memory, or may include both a volatile memory and a non-volatile memory. The non-volatile memory may be a read-only memory ROM, a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory RAM, and may serve as an external cache. By way of example rather than limitation, a plurality of forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM). It should be noted that the memory of the systems and methods described in this specification includes but is not limited to these and any memory of another proper type.

FIG. 11 is a block diagram of a communication apparatus 1100 according to this application. The apparatus 1100 includes a transceiver unit 1120, and the transceiver unit 1120 may be configured to implement a corresponding communication function. The transceiver unit 1120 may also be referred to as a communication interface or a communication unit.

Optionally, the apparatus 1100 may further include a processing unit 1110, and the processing unit 1110 may be configured to perform data processing.

Optionally, a specific form of the communication apparatus 1100 may be a general-purpose computer device or a chip in a general-purpose computer device. This is not limited in this embodiment of this application. As shown in FIG. 11, the apparatus includes a processing unit 1110 and a transceiver unit 1120.

Specifically, the communication apparatus 1100 may be any device in this application, and may implement a function that can be implemented by the device. It should be understood that the apparatus 1100 may be a physical device, a component (for example, an integrated circuit or a chip) of the physical device, or may be a functional module in the physical device.

In a possible design, the apparatus 1100 may be the terminal device (for example, the terminal device) in the foregoing method embodiments, or may be a chip configured to implement a function of the terminal device (for example, the terminal device) in the foregoing method embodiments.

Optionally, the apparatus 1100 further includes a storage unit. The storage unit may be configured to store instructions and/or data. The processing unit 1110 may read the instructions and/or the data in the storage unit, so that the apparatus implements actions of different terminal devices in the foregoing method embodiments, for example, actions of the control network element or the terminal device.

The apparatus 1100 may be configured to perform actions performed by the control network element or the terminal device in the foregoing method embodiments. In this case, the apparatus 1100 may be the control network element or the terminal device, or a component of the control network element or the terminal device. The transceiver unit 1120 is configured to perform receiving/sending-related operations of the control network element or the terminal device in the foregoing method embodiments. The processing unit 1110 is configured to perform processing-related operations of the control network element or the terminal device in the foregoing method embodiments.

It should be understood that the apparatus 1100 may be configured to perform actions performed by the control network element or the network device in the foregoing method embodiments. In this case, the transceiver unit 1120 in the apparatus 1100 may be implemented through a communication interface (for example, a transceiver or an input/output interface), for example, may correspond to the communication interface 1030 shown in FIG. 10. The processing unit 1110 in the apparatus 1100 may be implemented by using at least one processor, for example, may correspond to the processor 1010 shown in FIG. 10.

Optionally, the apparatus 1100 may further include a storage unit. The storage unit may be configured to store instructions or data. The processing unit may invoke the instructions or the data stored in the storage unit, to implement a corresponding operation.

It should be understood that a specific process in which the units perform the foregoing corresponding steps is described in detail in the foregoing method embodiments, and for brevity, details are not described herein.

It should be understood that a specific process in which the units perform the foregoing corresponding steps is described in detail in the foregoing method embodiments, and for brevity, details are not described herein.

In addition, in this application, the communication apparatus 1100 is presented in a form of functional modules. The "module" herein may be an application-specific integrated circuit ASIC, a circuit, a processor that executes one or more software or firmware programs and a memory, an integrated logic circuit, and/or another component that can provide the foregoing functions. In a simple embodiment, a person skilled in the art may figure out that the apparatus 1100 may be in a form shown in FIG. 11. The processing unit 1110 may be implemented by using the processor 1010 shown in FIG. 10. Optionally, if the computer device shown in FIG. 10 includes the memory 1000, the processing unit 1110 may be implemented by using the processor 1010 and the memory 1000. The transceiver unit 1120 may be implemented by using the transceiver 1030 shown in FIG. 10. The transceiver 1030 includes a receiving function and a sending function. Specifically, the processor is implemented by executing a computer program stored in the memory. Optionally, when the apparatus 1100 is a chip, a function and/or an implementation process of the transceiver unit 1120 may be alternatively implemented by using a pin, a circuit, or the like. Optionally, the memory may be a storage unit in the chip, for example, a register or a cache. Alternatively, the storage unit may be a storage unit that is in the apparatus and that is located outside the chip, for example, the memory 1020 shown in FIG. 10, or may be a storage unit that is deployed in another system or device and is not in the computer device.

Various aspects or features of this application may be implemented as methods, apparatuses, or products using standard programming and/or engineering techniques. For example, a computer-readable medium may include but is not limited to: a magnetic storage component (for example, a hard disk, a floppy disk, or a magnetic tape), an optical disc (for example, a compact disc (compact disc, CD) and a digital versatile disc (digital versatile disc, DVD)), a smart card, and a flash memory component (for example, an erasable programmable read-only memory (erasable programmable read-only memory, EPROM), a card, a stick, or a key drive). **In** addition, various storage media described in this specification may represent one or more devices and/or other machine-readable media that are configured to store information. The term "machine-readable media" may include but is not limited to various other media that can store, contain and/or carry instructions and/or data.

According to the method provided in embodiments of this application, this application further provides a computer program product. The computer program product includes a computer program or a group of instructions. When the computer program or the group of instructions are run on a computer, the computer is enabled to perform the method in any one of the embodiments shown in FIG. 7 to FIG. 9.

According to the method provided in embodiments of this application, this application further provides a computer-readable storage medium. The computer-readable medium stores a program or a group of instructions. When the program or the group of instructions are run on a computer, the computer is enabled to perform the method in any one of the embodiments shown in FIG. 7 to FIG. 9.

According to the method provided in embodiments of this application, this application further provides a communication system. The communication system includes the foregoing apparatus or device.

Terminologies such as "component", "module", and "system" used in this specification indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by using figures, both a computing device and an application that runs on the computing device may be components. One or more components may reside within a process and/or a thread of execution, and a component may be located on one computer and/or distributed between two or more computers. **In** addition, these components may be executed from various computer-readable media that store various data structures. The components may communicate by using a local and/or remote process and based on a signal having one or more data packets (for example, data from two components interacting with another component in a local system, a distributed system, and/or across a network like the Internet interacting with another system via the signal).

It should also be understood that the term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

It should be further understood that numbers "first", "second", and the like are introduced in embodiments of this application only to distinguish between different objects, for example, distinguish between different "information", "devices", or "units". Understanding of a specific object and a correspondence between different objects should be determined based on functions and internal logic of the specific object, and should not constitute any limitation on an implementation process of embodiments of this application.

The protocol in this application may be a communication protocol or a specification, for example, the 3GPP communication protocol.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The software product is stored in a storage medium, and includes several instructions for indicating a computing device (which may be a personal computer, a server, or a network device) to perform all or a part of the steps of the methods described in embodiments of this application. The foregoing storage medium includes any medium that can store program code, for example, a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method is used in a terminal device, and comprises:
receiving first information from a network device, wherein the first information comprises assistance information used to determine a reference point of a first cell, and the terminal device is located in the first cell;
predicting a distance between the terminal device and the reference point in a first time period based on the assistance information and location information of the terminal device; and
determining, based on threshold information and the predicted distance, whether to perform cell measurement, wherein the threshold information comprises a first threshold.

2. The method according to claim 1, wherein the assistance information comprises one or more of the following: location information of the reference point, time information of the reference point, ephemeris information, and path information of the reference point.

3. The method according to claim 1 or 2, wherein the determining, based on threshold information and the predicted distance, whether to perform cell measurement comprises:
when the distance between the terminal device and the reference point in the first time period is greater than or equal to the first threshold, determining, by the terminal device, to perform cell measurement.

4. The method according to any one of claims 1 to 3, wherein the determining, based on threshold information and the predicted distance, whether to perform cell measurement comprises:
when predicting that the distance between the terminal device and the reference point is less than the first threshold at an end moment of the first time period, determining, by the terminal device, not to perform cell measurement.

5. The method according to claim 4, wherein the determining, based on threshold information and the predicted distance, whether to perform cell measurement comprises:
when predicting that the distance between the terminal device and the reference point continuously decreases in the first time period, determining, by the terminal device, not to perform cell measurement.

6. The method according to claim 1, wherein the threshold information further comprises a second threshold, and the second threshold is greater than the first threshold.

7. The method according to claim 6, wherein when the distance between the terminal device and the reference point is greater than or equal to the first threshold and less than the second threshold, the determining, based on threshold information and the predicted distance, whether to perform cell measurement comprises:
when predicting that the distance between the terminal device and the reference point is less than the first threshold at an end moment of the first time period, determining, by the terminal device, not to perform cell measurement;
or
when predicting that the distance between the terminal device and the reference point in the first time period is greater than or equal to the first threshold, determining, by the terminal device, to perform cell measurement.

8. The method according to claim 6, wherein the determining, based on threshold information and the predicted distance, whether to perform cell measurement comprises:
when predicting that the distance between the terminal device and the reference point in the first time period is greater than or equal to the second threshold, determining, by the terminal device, to perform cell measurement.

9. The method according to any one of claims 1 to 8, wherein the method further comprises:
receiving first indication information from the network device, wherein the first indication information indicates whether the terminal device predicts the distance between the terminal device and the reference point in the first time period based on the assistance information and the location information of the terminal device, and/or the first indication information further indicates whether the terminal device determines, based on the threshold information and the distance, whether to perform cell measurement.

10. A communication apparatus, comprising:
a transceiver unit, configured to receive first information from a network device, wherein the first information comprises assistance information used to determine a reference point of a first cell, and a terminal device is located in the first cell; and
a processing unit, configured to predict a distance between the terminal device and the reference point in a first time period based on the assistance information and location information of the terminal device, wherein
the processing unit is further configured to determine, based on threshold information and the predicted distance, whether to perform cell measurement, wherein the threshold information comprises a first threshold.

11. The apparatus according to claim 10, wherein the assistance information comprises one or more of the following: location information of the reference point, time information of the reference point, ephemeris information, and path information of the reference point.

12. The apparatus according to claim 10 or 11, wherein the processing unit is configured to:
predict that the distance between the terminal device and the reference point in the first time period is greater than or equal to the first threshold, and determine to perform cell measurement.

13. The apparatus according to any one of claims 10 to 12, wherein the processing unit is configured to:
predict that the distance between the terminal device and the reference point is less than the first threshold at an end moment of the first time period, and determine not to perform cell measurement.

14. The apparatus according to claim 13, wherein the processing unit is configured to:
predict that the distance between the terminal device and the reference point continuously decreases in the first time period, and determine not to perform cell measurement.

15. The apparatus according to claim 10, wherein the threshold information further comprises a second threshold, and the second threshold is greater than the first threshold.

16. The apparatus according to claim 15, wherein when the distance between the terminal device and the reference point is greater than or equal to the first threshold and less than the second threshold, the processing unit is configured to predict that the distance between the terminal device and the reference point is less than the first threshold at an end moment of the first time period, and determine not to perform cell measurement;
or
the processing unit is configured to predict that the distance between the terminal device and the reference point in the first time period is greater than or equal to the first threshold, and determine to perform cell measurement.

17. The apparatus according to claim 16, wherein the processing unit is configured to:
predict that the distance between the terminal device and the reference point in the first time period is greater than or equal to the second threshold, and determine to perform cell measurement.

18. The apparatus according to any one of claims 10 to 17, wherein the transceiver unit is further configured to receive the first indication information from the network device, wherein the first indication information indicates whether the communication apparatus predicts the distance between the terminal device and the reference point in the first time period based on the assistance information and the location information of the terminal device, and/or the first indication information further indicates whether the communication apparatus determines, based on the threshold information and the distance, whether to perform cell measurement.

19. A communication apparatus, comprising:
a processor and a memory, wherein
the processor is configured to execute a computer program stored in the memory, to enable the communication apparatus to perform the method according to any one of claims 1 to 9.

20. A computer-readable storage medium, wherein the computer-readable storage medium stores a computer program, and when the computer program is run on a computer, the computer is enabled to perform the method according to any one of claims 1 to 9.

21. A chip apparatus, comprising a processor, configured to invoke a computer program from a memory and run the computer program, to enable a communication device on which the chip system is installed to perform the method according to any one of claims 1 to 9.
